# EUROPÄISCHE PATENTSCHRIFT

(11) **EP 2 576 296 B1**
(45) Veröffentlichungstag und Bekanntmachung des Hinweises auf die Patenterteilung: **10.01.2018**
(21) Anmeldenummer: 11711449.6
(22) Anmeldetag: 15.03.2011
(51) Int. Cl.: B60T 1/06, B60T 10/02, B60K 17/28, B60L 7/00

(54) **VERFAHREN ZUM MONTIEREN EINES RETARDERS, INSBESONDERE PERMANENTMAGNETRETARDERS, IN EINEM FAHRZEUGANTRIEBSSTRANG**
METHOD OF FITTING A RETARDER, ESPECIALLY A PERMAMENT MAGNET RETADER, IN A VEHICLE DRIVE TRAIN
PROCEDE DE MONTAGE D'UN RETARDATEUR, EN PARTICLIER UN RETARDATEUR AIMANT PEMANENT, DANS UN CHAÎNE CINÉMATIQUE DE VÉHICULE

(30) Priorität: 27.05.2010 DE 102010021709
(43) Veröffentlichungstag der Anmeldung: 10.04.2013
(73) Patentinhaber: Voith Patent GmbH, 89522 Heidenheim (DE)
(72) Erfinder: ADAMS, Werner, 74564 Crailsheim (DE); FOEHL, Bruno, 74586 Frankenhardt (DE); MANDLIK, Manfred, 74594 Kressberg (DE); REINMUTH, Steffen, 74564 Crailsheim (DE); KELLER, Alfred, 74423 Obersontheim (DE)
(74) Vertreter: Dr. Weitzel & Partner
(86) Internationale Anmeldenummer: PCT/EP2011/001269
(87) Internationale Veröffentlichungsnummer: WO 2011/147497

(56) Entgegenhaltungen:
- DE-A1- 4 026 251
- DE-U1- 8 914 286
- US-A1- 2011 024 216

## Beschreibung

Die vorliegende Erfindung betrifft ein Verfahren zum Montieren eines Retarders, insbesondere Permanentmagnetretarders, in einem Fahrzeugantriebsstrang, der eine Gelenkwelle zur Antriebsleistungsübertragung aufweist.

Retarder werden in Kraftfahrzeugen zum verschleißfreien Abbremsen des Fahrzeugs eingesetzt. Man unterscheidet zwischen verschiedenen Retardertypen, wie hydrodynamischer Retarder, Elektromagnetretarder, auch elektrodynamischer Retarder oder Wirbelstrombremse genannt, und Permanentmagnetretarder. Die vorliegende Erfindung betrifft jegliche Art von Retardern, ist jedoch besonders für die Verwendung mit einem Permanentmagnetretarder geeignet. Auch bei Retardern, die neben ihrer Bremsfunktion in einem zweiten Betriebszustand eine Antriebsfunktion aufweisen, ist die vorliegende Erfindung geeignet. Beispielsweise kann der Retarder als Elektromotor ausgeführt sein, der in einem ersten Betriebszustand - Bremsbetrieb - generatorisch betrieben wird, um ein Bremsmoment zu erzeugen und dabei gemäß einer Ausführungsform den erzeugten Strom in einem zugeordneten elektrischen Energiespeicher zu speichern, und der in einem zweiten Betriebszustand - Traktionsbetrieb - mit elektrischer Energie insbesondere aus dem Energiespeicher gespeist wird, um Antriebsleistung zu erzeugen. Auch die Ausführungsform des Retarders als hydrostatischer Motor mit entsprechender Wirkungsweise und einem hydraulischen oder pneumatischen Speicher ist möglich.

Hydrodynamische Retarder weisen einen Rotor und einen Stator auf, die miteinander einen mit Arbeitsmedium befüllten oder befüllbaren Arbeitsraum ausbilden. Durch Antreiben des Rotors bildet sich eine drehmomentübertragende Arbeitsmediumkreislaufströmung im Arbeitsraum aus, mittels welcher Drehmoment vom Rotor auf den Stator übertragen wird, was, da der Stator stationär gehalten ist, zu einem Abbremsen des umlaufenden Rotors führt. Die Höhe des Bremsmomentes kann beispielsweise durch Verändern des Füllungsgrades des Arbeitsraumes eingestellt werden.

Bei Elektromagnetretardern (Wirbelstrombremsen) wird mittels Elektromagneten ein Magnetfeld erzeugt, in welchem ein Rotor aus magnetisierbarem Material umläuft. Durch Beaufschlagung des Rotors mit dem Magnetfeld wird dieser abgebremst. Prinzipiell ist es natürlich auch möglich, die Elektromagneten im Rotor vorzusehen und das magnetisierbare Material im Stator.

Beim Permanentmagnetretarder sind im Stator Permanentmagneten angeordnet, welche ein Magnetfeld wahlweise erzeugen, in welchem der Rotor, der aus magnetisierbarem Material hergestellt ist, rotiert. Die Position der Permanentmagneten und/oder eines diesen zugeordneten Bauteils, beispielsweise eines Polschuhs ist derart veränderbar, dass in einem ersten Zustand keine Magnetkraft beziehungsweise kein Magnetfeld auf den Rotor wirkt, und in einem zweiten Zustand die maximale Magnetkraft beziehungsweise das stärkste Magnetfeld auf den Rotor wirkt. Beispielsweise können die Magneten im ausgeschalteten Zustand derart überbrückt werden, dass keine Magnetkraft zum Rotor fließt beziehungsweise kein Magnetfeld, das auf den Rotor wirkt, erzeugt wird und im eingeschalteten Zustand wird die Überbrückung aufgehoben. Auch Zustände mit verminderter Magnetkraft beziehungsweise vermindertem Magnetfeld zum Einstellen eines variablen Bremsmomentes können vorgesehen werden.

Obwohl die bekannten Arten von Retardern aufgrund ihres Vermögens, das Fahrzeug verschleißfrei abzubremsen, zahlreiche Vorteile mit sich bringen, bedeutet die Integration im Fahrzeug immer einen baulichen Mehraufwand. Dieser bauliche Mehraufwand führt zu Kosten und häufig auch bei einem beengten Bauraum zu Platzproblemen. Dies ist insbesondere dann der Fall, wenn der Retarder im Bereich der Gelenkwelle eines Fahrzeugs, welche insbesondere das Fahrzeuggetriebe mit den Antriebsrädern beziehungsweise einem Achsgetriebe auf der Achse der Antriebsräder verbindet, angeordnet werden soll, wie dies gemäß einer Ausführungsform der vorliegenden Erfindung der Fall ist, da dann Modifikationen der Gelenkwelle notwendig sind. In der Regel wird eine üblicherweise vorgesehene Gelenkwelle durch mehrere hintereinander geschaltete Gelenkwellen ersetzt und der Retarder wird zwischen diese Gelenkwellen eingebaut. So beschreibt beispielsweise das Dokument US 3 871 466 A einen Elektromagnetretarder, dessen Stator mit den Elektromagneten am Chassis eines Fahrzeugs aufgehängt ist und weicher über eine Wälzfagerung eine Verbindungswelle trägt, die einerseits zwei Kreuzgelenkwellen auf der Abtriebsseite des Getriebes miteinander verbindet und andererseits den Rotor des Retarders, der den Stator mit den Elektromagneten in Axialrichtung beidseitig einschließt, trägt.

Es ist leicht verständlich, dass diese Art des Austausches einer Gelenkwelle durch mehrere neue Gelenkwellen und das Zwischenschalten des Retarders mit eigener Lagerung zwischen die neuen Gelenkwellen aufwändig und teuer ist.

Zum druckschriftlichen Stand der Technik wird auf die folgenden Dokumente verwiesen:
DE 40 26 251 A1
DE 89 14 286 U1
US 2011/024216A1.

Der vorliegenden Erfindung liegt die Aufgabe zugrunde, ein Verfahren zum Montieren eines Retarders, insbesondere Permanentmagnetretarders, in einem Fahrzeugantriebsstrang, der eine Gelenkwelle zur Antriebsleistungsübertragung aufweist, anzugeben, welches eine besonders kostengünstige Integration des Retarders ermöglicht und auch zur Nachrüstung eines Fahrzeugs mit einem Retarder geeignet ist.

Die erfindungsgemäße Aufgabe wird durch ein Verfahren mit den Merkmalen von Anspruch 1 gelöst. In den abhängigen Ansprüchen sind vorteilhafte und besonders zweckmäßige Ausgestaltungen der Erfindung angegeben.

Gemäß dem erfindungsgemäßen Verfahren, welches insbesondere zur Montage eines Retarders, vorteilhaft Permanentmagnetretarders, im Bereich der Gelenkwelle, die ein Fahrzeuggetriebe mit einem Achsgetriebe oder mit Antriebsrädern zur Übertragung der Antriebsleistung vom Antriebsmotor auf die Antriebsräder verbindet, geeignet ist, wird zunächst die Gelenkwelle an einer axialen Position oder an zwei axialen Positionen zwischen den Gelenken der Gelenkwelle durchtrennt. Beim Durchtrennen an nur einer axialen Position entstehen entsprechend zwei Gelenkwellenabschnitte, und beim Durchtrennen an zwei axialen Positionen entstehen entsprechend drei Gelenkwellenabschnitte.

Alternativ zu dem Durchtrennen der Gelenkwelle an einer öder zwei axialen Positionen können zwei Gelenkwellenabschnitte auch gleich getrennt voneinander zur Verfügung gestellt werden.

Erfindungsgemäß wird nun ein Adapterzwischenstück an die einander zugewandten Stirnseiten von zwei Gelenkwellenabschnitten angefügt, sodass das Adapterzwischenstück beidseitig in Axialrichtung zwischen den Gelenkwellenabschnitten eingeschlossen ist.

Wenn die Gelenkwelle an zwei axialen Positionen durchtrennt wird, sodass drei Gelenkwellenabschnitte entstehen, kann das Adapterzwischenstück vorteilhaft den mittleren herausgetrennten Gelenkwellenabschnitt ersetzen und die beiden äußeren Gelenkwellenabschnitte, wie nachfolgend noch dargelegt wird, miteinander verbinden.

Nach dem Anfügen des Adapterzwischenstückes zunächst an nur eine Stirnseite von nur einem Gelenkwellenabschnitt oder gleich an die beiden einander zugewandten Stirnseiten von zwei Gelenkwellenabschnitten wird das Adapterzwischenstück formschlüssig oder stoffschlüssig zunächst nur mit dem einen Gelenkwellenabschnitt oder mit beiden Gelenkwellenabschnitten an den genannten Stirnseiten oder im Bereich dieser Stirnseiten verbunden. Wenn zunächst nur ein Gelenkwellenabschnitt an das Adapterzwischenstück angefügt und verbunden wurde, wird danach der zweite Gelenkwellenabschnitt an das Adapterzwischenstück angefügt und mit diesem formschlüssig oder stoffschlüssig verbunden, sodass im Ergebnis dieselbe Verbindung zwischen zwei Gelenkwellenabschnitten mit dem zwischengefügten Adapterzwischenstück vorliegt, wie bei der Alternative, an dem zunächst beide Gelenkwellenabschnitte an das Adapterzwischenstück angefügt und anschließend verbunden werden.

Die beiden Gelenkwellenabschnitte sind durch das Verbinden mit dem Adapterzwischenstück nun über das Adapterzwischenstück drehfest und/oder starr aneinander angeschlossen. Da das Adapterzwischenstück Aufnahmen, eine einzige Aufnahme oder eine Vielzahl von Aufnahmen, für den Retarder aufweist, kann nun der Retarder an dieser wenigstens einen Aufnahme montiert werden. Selbstverständlich ist es auch möglich, den Retarder oder ein Teil desselben an dem Adapterzwischenstück vorzumontieren, bevor das Adapterzwischenstück an den Gelenkwellenabschnitten angeschlossen wird.

Gemäß einer besonders einfachen Ausführungsform wird das Adapterzwischenstück an den beiden Stirnseiten oder im Bereich der beiden Stirnseiten der Gelenkwellenabschnitte, die einander zugewandt sind, an die Gelenkwellenabschnitte angeschweißt. Hierzu oder auch bei anderen Verbindungstechniken können die Stirnseiten mit einem in Axialrichtung vorstehenden Bund versehen sein, auf welchen das Adapterzwischenstück vor oder bei seiner Verbindung mit dem Gelenkwellenabschnitt aufgeschoben wird oder in welchen es eingeschoben wird, um dadurch auf dem Gelenkwellenabschnitt zentriert zu werden. Wenn dabei ein Spalt in Axialrichtung an der äußeren Oberfläche, insbesondere radial außerhalb des Bundes des Gelenkwellenabschnittes oder eines entsprechenden Bundes des Adapterzwischenstückes, verbleibt, kann dieser Spalt mit dem Schweißzusatzmaterial verschlossen werden, um eine im Wesentlichen bündige Oberfläche zu erhalten.

Gemäß einer Ausführungsform weist der Retarder einen Rotor und einen Stator auf, wobei der Stator auf dem Rotor relativgelagert ist. Der Rotor wird an die wenigstens eine Aufnahme des Adapterzwischenstückes drehfest montiert, insbesondere angeschraubt, und der Stator wird gegen Umlaufen am Fahrzeug, insbesondere am Fahrzeugrahmen, mittels einer Drehmomentstütze abgestützt.

Gemäß einer Ausführungsform weist das Adapterzwischenstück abspanbare Materialvorsprünge zum Wuchten auf. Demgemäß kann insbesondere nach der Montage des Adapterzwischenstückes Material an diesen Materialvorsprüngen abgenommen werden, um das Adapterzwischenstück mit dem Retarder beziehungsweise die Gelenkwelle mit dem Retarder zu wuchten. Zusätzlich oder alternativ kann auch ein Materialvorsprung zur Aufnahme von Wuchtgewichten am Adapterzwischenstück vorgesehen sein, und das Wuchten durch Hinzufügen oder Entfernen von Wuchtgewichten ausgeführt werden.

Besonders günstig ist es, wenn das Adapterzwischenstück einen zylinderförmigen Grundkörper aufweist, welcher in einem zylinderförmigen Bereich der Gelenkwelle zwischen zwei Gelenkwellenabschnitten an diese angeschlossen wird. Der Grundkörper und insbesondere die Anschlussbereiche der Gelenkwellenabschnitte können beispielsweise rohrförmig sein.

Die Erfindung soll nachfolgend anhand von Ausführungsbeispielen und den Figuren exemplarisch erläutert werden.

Es zeigen:
- Figur 1: eine schematische Draufsicht auf ein Fahrzeug mit Darstellung der Positionierung der Gelenkwelle im Fahrzeugantriebsstrang;
- Figur 2: eine vergrößerte Darstellung der Gelenkwelle aus der Figur 1;
- Figur 3: ein erstes Ausführungsbeispiel der Anordnung eines Permanentmagnetretarders auf der Gelenkwelle gemäß einem erfindungsgemäßen Verfahren;
- Figur 4: eine schematische Darstellung einer Ausführungsform mit Permanentmagnetretarder im eingeschalteten Zustand;
- Figur 5: die Ausführungsform aus der Figur 4 im ausgeschalteten Zustand;
- Figur 6: einen Axialschnitt durch einen Permanentmagnetretarder gemäß den Figuren 4 und 5;
- Figur 7: einen Axialschnitt durch ein zwischen einem Gelenkwellenrohr und einem Rohranschlussstück montierten Adapterzwischenstück, das einen Permanentmagnetretarder trägt.

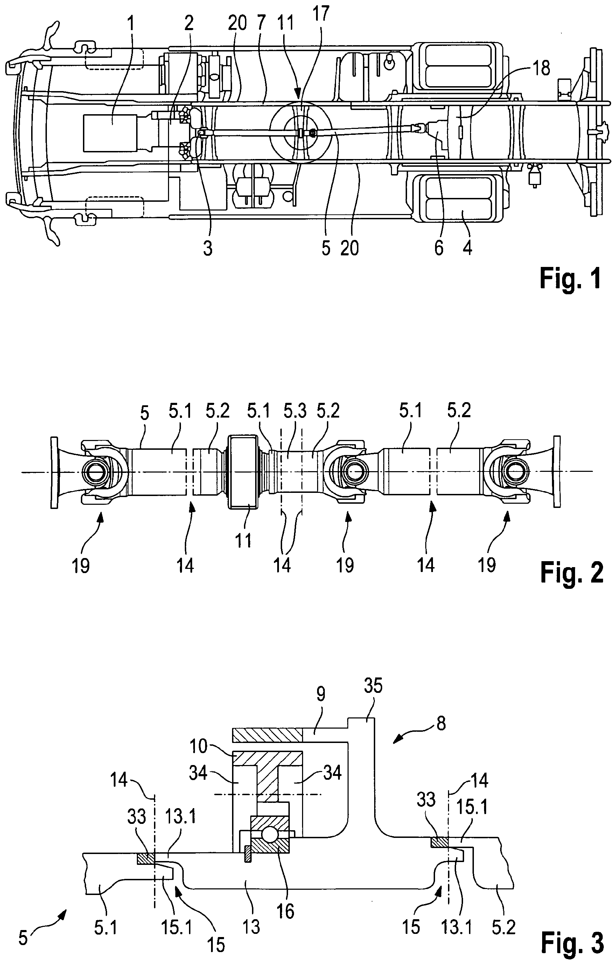

In der Figur 1 erkennt man eine schematische Draufsicht auf ein Fahrzeug mit einem Antriebsmotor 1, mit einem Getriebe 2 und Antriebsrädern 4. Die Antriebsräder werden über eine Antriebsachse 18 angetrieben, welcher wiederum ein Achsgetriebe 6, beispielsweise ein Differenzialgetriebe, zugeordnet ist. Um die Antriebsleistung des Antriebsmotors 1 vom Getriebe 2 auf das Achsgetriebe 6 zu übertragen, wobei das Achsgetriebe 6 in einer anderen Ebene angeordnet ist als das Getriebe 2, ist eine Gelenkwelle 5 vorgesehen, welche die Getriebeausgangswelle 3 mit dem Achsgetriebe 6 verbindet. Die Gelenkwelle 5 ist an ihrem ersten, antriebsseitigen axialen Ende über die Getriebeausgangswelle 3 im Getriebe 2 gelagert, und an ihrem zweiten, abtriebsseitigen axialen Ende über eine Eingangswelle des Achsgetriebes 6 am Achsgetriebe 6 und/oder über dieses auf der Antriebsachse 18.

Ferner ist im Bereich der axialen Mitte der Gelenkwelle 5, vorliegend betrachtet in Richtung des Antriebsleistungsflusses vom Motor 1 zu den Antriebsrädern 4, vor dem zweiten von drei Gelenken der Gelenkwelle 5 die Gelenkwelle 5 über ein Zwischenlager 11 am Fahrzeugrahmen 7, genauer an einem Querträger 17 desselben, der zwei Längsträger 20 verbindet, aufgehängt.

In der Figur 2 ist nochmals die gesamte Gelenkwelle 5 mit dem darauf angeordneten Zwischenlager 11 und den drei Gelenken 19 dargestellt. Erfindungsgemäß kann nun die Gelenkwelle 5, welches insbesondere die einzige Gelenkwelle zwischen dem Getriebe 2 (Figur 1) und dem Achsgetriebe 6 (Figur 1) beziehungsweise zwischen dem Getriebe 2 (Figur 1) und den Antriebsrädern 4 (Figur 1) ist, an einer der mit 14 bezeichneten axialen Positionen durchtrennt werden. Im mittleren Bereich ist schematisch angedeutet, dass die Gelenkwelle 5 zweimal, nämlich an zwei axialen Positionen 14, durchtrennt wird, sodass sich drei Gelenkwellenabschnitte 5.1, 5.2 und 5.3 ergeben. Der dritte, nämlich der mittlere Gelenkwellenabschnitt 5.3, kann dann durch ein Adapterzwischenstück 13, wie es mit Bezug auf die Figur 3 noch beschrieben wird, ersetzt werden. Bei den beiden anderen Trennstellen 14 hingegen ist angedeutet, dass die Gelenkwelle 5 nur einmal durchtrennt wird, sodass sich nur zwei Gelenkwellenabschnitte 5.1 und 5.2 ergeben, zwischen welche das Adapterzwischenstück 13 dann eingefügt wird. Demgemäß fällt kein Gelenkwellenabschnitt als Ausschuss an, was jedoch ein Kürzen der Gelenkwellenabschnitte durch ein anderes Verfahren, beispielsweise durch Abschleifen oder ein spanabhebendes Verfahren erfordern kann.

In der Figur 3 ist nun ein Adapterzwischenstück 13 dargestellt, welches gemäß dem erfindungsgemäßen Verfahren mit zwei Gelenkwellenabschnitten 5.1 und 5.2 im Bereich deren Stirnseiten 15 verbunden wird. Hierzu wird gemäß dem gezeigten Ausführungsbeispiel jede Stirnseite 15 mit einem in Axialrichtung vorstehenden Bund 15.1 versehen, aufweichen dann ein Bund 13.1 des Adapterzwischenstückes aufgeschoben (linke Seite) beziehungsweise in weichen ein Bund 13.1 des Adapterzwischenstückes 13 eingeschoben (rechte Seite) wird. In einen verbleibenden Spalt zwischen dem jeweiligen Gelenkwellenabschnitt 5.1, 5.2 und dem Adapterzwischenstück 13 kann dann beispielsweise eine Schweißnaht 33 eingebracht werden, um die Bauteile miteinander zu verschweißen.

Das Adapterwischenstück 13 gemäß der Figur 3 trägt zum einen den Rotor 9 des Permanentmagnetretarders 8 sowie über ein Retarderlager 16 den Stator 10 des Permanentmagnetretarders 8. Hierzu ist der Stator 10 beispielsweise zwischen zwei Klemmstücke 34, die außen auf dem Retarderlager 16 montiert sind, eingeklemmt und verschraubt. Andere Ausführungsformen kommen selbstverständlich in Betracht.

Das Adapterzwischenstück 13 weist ferner überschüssiges Material 35 auf, das zum Auswuchten des Adapterzwischenstückes 13 zusammen mit dem Retarder beziehungsweise des gesamten Gelenkwellenstranges wahlweise abgetragen werden kann. Zusätzlich oder alternativ können auch Wuchtgewichte vorgesehen sein.

Bei der Ausführungsform gemäß der Figur 3 ist demnach der Stator 10 auf dem Adapterzwischenstück 13 relativgelagert, wohingegen der Rotor 9 direkt auf dem Adapterzwischenstück 13 gelagert ist. Der Stator 10 sollte gegen Umlaufen am Fahrzeug, insbesondere am Fahrzeugrahmen, abgestützt sein.

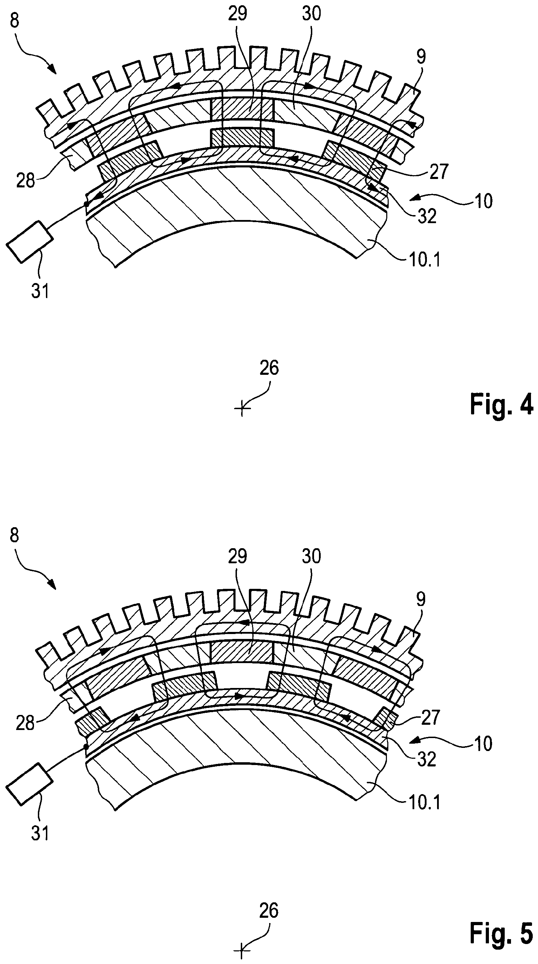

Bei dem in den Figuren 4 und 5 gezeigten Ausführungsbeispiel eines Permanentmagnetretarders, dessen Rotor 9 und Stator 10 gemäß einer Ausführung der Erfindung durch die Gelenkwelle getragen werden können, umschließt der Rotor 9 den Stator 10 in Umfangsrichtung. Der Rotor 9 dreht sich über der Drehachse 26 und ist konzentrisch zum Stator 10 angeordnet.

Der Stator 10 weist einen gegenüber einem radial inneren feststehenden Kernbereich 10.1 in Umfangsrichtung verschiebbaren ringförmigen Magnetenträger 32 auf, der eine Vielzahl von Permanentmagneten 27 trägt. Die Permanentmagneten 27 sind in Umfangsrichtung über der Drehachse 26 mit alternierender Polung hintereinander angeordnet, das heißt alle Permanentmagneten 27 in der Abfolge mit gerader Positionsnummer weisen einen radial außenliegenden Nordpol und einen radial innenliegenden Südpol auf, und alle Permanentmagneten 27 mit ungerader Positionsnummer weisen einen radial außenliegenden Südpol und einen radial innenliegenden Nordpol auf.

In Radialrichtung zwischen dem Rotor 9 und dem Stator 10 ist ein Schaltelement 28 angeordnet, das insbesondere stationär ausgeführt sein kann, beispielsweise als Gehäuseschale des Stators 10. Das Schaltelement 28 hat eine Ringform und in Umfangsrichtung wechseln sich magnetisierbare Rückschlusselemente 29 mit nicht-magnetisierbaren Zwischenelementen 30 ab. Die Rückschlusselemente 29 sind beispielsweise aus Stahl oder Eisen und die nicht-magnetisierbaren Zwischenelemente aus Aluminium hergestellt.

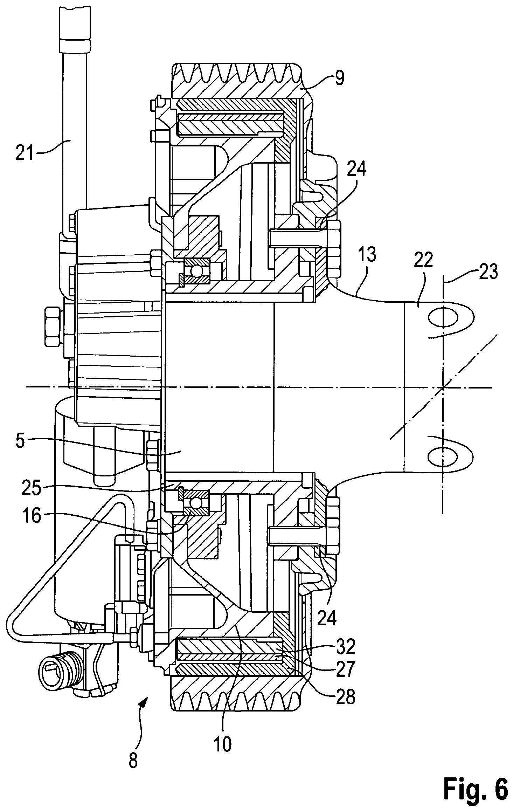

Wenn nun, wie in der Figur 4 gezeigt ist, die Rückschlusselemente 29 den Permanentmagneten 27 in Radialrichtung gegenüberstehen, insbesondere fluchtend zueinander ausgerichtet sind, kann sich ein Magnetfeld ausbilden, das von dem Stator 10 bis in den Rotor 9 und zurück reicht. Wie gezeigt, reichen beispielsweise die äußeren Magnetflusslinien des Magnetfeldes von einem ersten Permanentmagneten 27 durch das gegenüberliegende erste Rückschlusselement 29 in den Rotor 9, der insbesondere aus Stahl oder Eisen hergestellt ist, in Umfangsrichtung entlang des Rotors 9, zurück durch ein zweites Rückschlusselement 29 radial nach innen durch einen zweiten Permanentmagneten 27 und zurück in entgegengesetzter Umfangsrichtung wie im Rotor 9 durch den Magnetenträger 32, der entsprechend auch aus Stahl oder Eisen hergestellt sein kann, erneut in den ersten Permanentmagneten 27. Wenn hingegen, wie in der Figur 6 dargestellt ist, die Zwischenelemente 30 den Permanentmagneten 27 in Radialrichtung gegenüberstehen, so überbrückt jeweils ein Rückschlusselement 29 zwei benachbart zueinander angeordnete Permanentmagneten 27, wodurch ein kleineres Magnetfeld erreicht wird, das nicht bis in den Rotor 9 hineinreicht.

Demgemäß übt bei der Position in der Figur 4, die vorliegend als erste Position bezeichnet wird, der Stator 10 mittels der Magnetfelder eine Bremswirkung auf den Rotor 9 aus, wohingegen in der als zweite Position bezeichneten Position gemäß der Figur 5 kein Bremsmoment durch ein Magnetfeld auf den Rotor 9 ausgeübt wird. In der ersten Position ist demnach der Permanentmagnetretarder 8 eingeschaltet, und in der zweiten Position ist der Permanentmagnetretarder 8 ausgeschaltet.

Zur begrenzten Verschiebung des Magnetenträgers 32 ist an diesem ein Aktuator 31 angeschlossen, der beispielsweise durch einen einfachwirkenden oder doppeltwirkenden Druckzylinder oder mehrere hiervon gebildet werden kann. Auch andere Aktuatorenformen sind möglich, beispielsweise elektrische oder pneumatische sowie hydraulische.

In der Figur 6 ist nun nochmals dargestellt, wie ein Permanentmagnetretarder 8 gemäß der Figuren 4 und 5 an einem neben dem Kreuzgelenkwellenflansch 22 eingesetzten Adapterzwischenstück 13 angeschlossen werden kann. Hierbei erkennt man die Aufnahmen 24 des Adapterzwischenstückes 13, die in Radialrichtung hervorstehen, an welche der Rotor 9 angeschraubt ist. Man könnte die Aufnahmen 24 auch als Ohren bezeichnen. Vorliegend sind genau zwei Aufnahmen 24 vorgesehen. Jedoch wäre es auch möglich, nur eine einzige, insbesondere über dem Umfang vollständig umlaufende Aufnahme oder eine Vielzahl von drei oder mehr Aufnahmen vorzusehen.

Der Rotor 9 weist in dem gezeigten Ausführungsbeispiel einen inneren Tragring 25 auf, der sich radial innerhalb des Stators 10 erstreckt und auf welchem der Stator 10 mittels des Retarderlagers 16 relativgelagert ist.

Der innere Tragring 25 umschließt die Gelenkwelle 5, hier einen zylindrischen Teil derselben, der sich an den Kreuzgelenkwellenflansch 22 beziehungsweise das Adapterzwischenstück 13 in Richtung des Permanentmagnetretarders 8 anschließt, mit einem vorgegebenen Abstand. Insbesondere wird auch das Adapterzwischenstück 13 mit Abstand durch den inneren Tragring 25 umschlossen. Entsprechend der in den Figuren 4 und 5 gezeigten Ausführungsform umschließt der Rotor 9 den Stator 10 radial von außen. Der Stator 10 weist wiederum den Magnetenträger 32 mit den Permanentmagneten 27 sowie das Schaltelement 28 zwischen dem Rotor 9 und dem Permanentmagneten 27 auf.

Schließlich ist in der Figur 6 das Zapfenkreuz 23 schematisch dargestellt. Dieses Zapfenkreuz 23 wird durch den Kreuzgelenkwellenflansch 22 getragen.

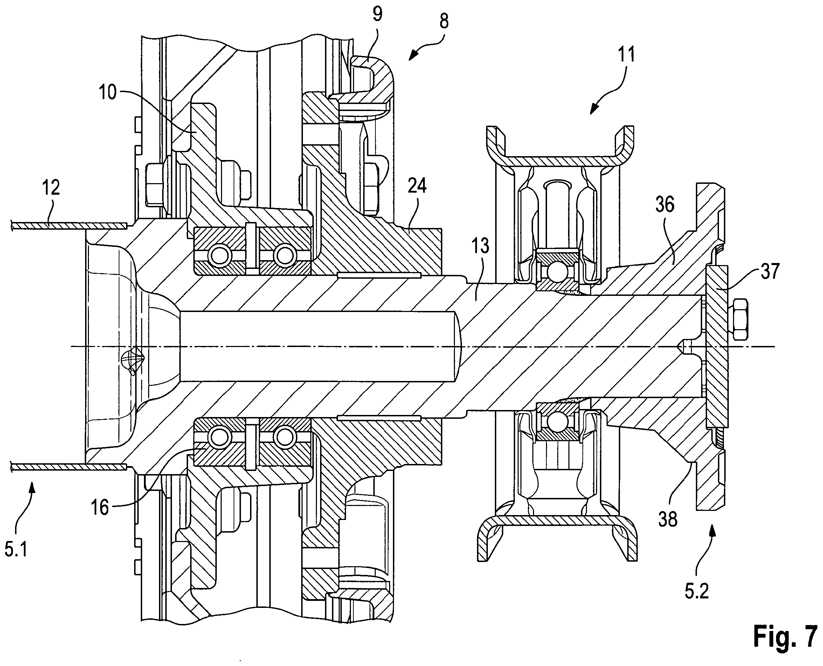

In der Figur 7 ist eine Ausführungsform eines in einem Fahrzeugantriebsstrang nach dem erfindungsgemäßen Verfahren montierten Permanentmagnetretarders (8) dargestellt, bei welcher das Durchtrennen der Gelenkwelle, um die beiden Gelenkwellenabschnitte 5.1 und 5.2 zu erhalten, an der Schnittstelle zwischen einem Gelenkwellenrohr 12 und einem in dieses eingefügten Rohranschlussstückes 36 erfolgt ist. Alternativ könnten, wie auch bei den zuvor dargestellten Ausführungsformen, das Gelenkwellenrohr 12 als erster Gelenkwellenabschnitt 5.1 und das Rohranschlussstück 36 als zweiter Gelenkwellenabschnitt 5.2 auch getrennt voneinander zur Verfügung gestellt werden, ohne dass zuvor die Durchtrennung stattgefunden hat.

Das Adapterzwischenstück 13 ist mit einem axialen Ende in das Gelenkwellenrohr 12 eingeschoben worden und an seinem anderen axialen Ende ist das Rohranschlussstück 36 montiert worden, hier durch Aufschrauben einer Halteplatte 37. Das Adapterzwischenstück 13 weist eine Aufnahme 24 für den Rotor 9 des Permanentmagnetretarders 8 auf und trägt ferner über das Retarderlager 16, das beispielsweise als Doppellager ausgeführt ist, den Stator 10 des Permanentmagnetretarders 8.

In dem gezeigten Ausführungsbeispiel ist der Innendurchmesser des Anschlusses, hier der auf das Adapterzwischenstück 13 aufgeschobenen Aufnahme 24, die insbesondere mit dem Adapterzwischenstück 13 verschweißt sein kann, und/oder des Retarderlagers 16 kleiner als der Außendurchmesser des Gelenkwellenrohres 12 und des ursprünglich am Rohranschlussstück 36 vorgesehenen Aufnahmebereichs 38 für das Gelenkwellenrohr 12.

Ferner ist das Adapterzwischenstück 13 in dem Zwischenlager 11 gelagert, wobei auch der Innendurchmesser des Zwischenlagers 11 kleiner ist als der Aüßendurchmesser des Gelenkwellenrohres 12 beziehungsweise des Rohranschlussstückes 36, von letzterem insbesondere als dessen Bereich 38. Somit kann eine ursprünglich im Zwischenlager 11 vorgesehene oder eingebaute Gelenkwelle durch eine Gelenkwelle mit vergleichsweise größerem Außendurchmesser ersetzt werden.

Die Erfindung wurde anhand einer Ausführungsform mit einem Permanentmagnetretarder beschrieben. Jedoch kann auch ein anderer Retarder, beispielsweise hydrodynamischer Retarder, Elektromagnetretarder oder zur Herstellung eines Hybridantriebs auch ein Elektromotor oder sonstiger Motor als Retarder an der Stelle des Permanentmagnetretarders vorgesehen sein, um die Gelenkwelle zumindest in einem ersten Betriebszustand abzubremsen. Bei einem Hybridantrieb ist ferner ein zweiter Betriebszustand vorgesehen, in welchem der Rotor angetrieben wird, um die Gelenkwelle zu beschleunigen.

## Patentansprüche

1. Verfahren zum Montieren eines Retarders, insbesondere Permanentmagnetretarders (8), in einem Fahrzeugantriebsstrang, der eine Gelenkwelle (5) zur Antriebsleistungsübertragung aufweist, mit den folgenden Schritten:
1.1 Durchtrennen der Gelenkwelle (5) an einer axialen Position (14) oder zwei axialen Positionen (14) zwischen deren Gelenken (19) oder Zurverfügungstellen von Gelenkwellenabschnitten (5.1, 5.2), sodass sich zwei oder drei Gelenkwellenabschnitte (5.1, 5.2, 5.3) mit einander zugewandten Stirnseiten (15) ergeben;
1.2 Anfügen eines Adapterzwischenstückes (13), das eine oder mehrere Aufnahmen (24) zur Montage des Retarders aufweist, an die einander zugewandten Stirnseiten (15) von zwei Gelenkwellenabschnitten (5.1, 5.2), sodass das Adapterzwischenstück (13) beidseitig in Axialrichtung zwischen den Gelenkwellenabschnitten (5.1, 5.2) eingeschlossen ist;
1.3 formschlüssiges oder stoffschlüssiges Verbinden des Adapterzwischenstückes (13) mit den Stirnseiten (15) oder im Bereich der Stirnseiten (15), sodass die beiden Gelenkwellenabschnitte (5.1, 5.2) über das Adapterzwischenstück (13) drehfest und/oder starr aneinander angeschlossen sind;
1.4 Montieren des Retarders an der wenigstens einen Aufnahme (24) des Adapterzwischenstückes (13).

2. Verfahren gemäß Anspruch 1, **dadurch gekennzeichnet, dass** das Adapterzwischenstück (13) an den beiden Stirnseiten (15) oder im Bereich der beiden Stirnseiten (15) an die Gelenkwellenabschnitte (5.1, 5.2) angeschweißt wird.

3. Verfahren gemäß einem der Ansprüche 1 oder 2, **dadurch gekennzeichnet, dass** an dem Adapterzwischenstück (13) abspanbare Materialvorsprünge (35) zum Wuchten oder Wuchtgewichte vorgesehen werden.

4. Verfahren gemäß einem der Ansprüche 1 bis 3, **dadurch gekennzeichnet, dass** der Retarder einen Rotor (9) und einen Stator (10) aufweist, und der Rotor (9) an der wenigstens einen Aufnahme (24) des Adapterzwischenstückes (13) drehfest montiert, insbesondere angeschraubt wird, und der Stator (10) mittels eines Retarderlagers (16), insbesondere Wälzlagers, auf dem Adapterzwischenstück (13) relativgelagert wird.

5. Verfahren gemäß einem der Ansprüche 1 bis 3, **dadurch gekennzeichnet, dass** der Retarder einen Rotor (9) und einen auf dem Rotor (9) relativgelagerten Stator (10) aufweist, und der Rotor (9) an der wenigstens einen Aufnahme (24) des Adapterzwischenstückes (13) drehfest montiert, insbesondere angeschraubt wird, und der Stator (10) gegen Umlaufen am Fahrzeug, insbesondere einem Fahrzeugrahmen (7) desselben, abgestützt wird.

6. Verfahren gemäß einem der Ansprüche 1 bis 5, **dadurch gekennzeichnet, dass** eine oder die beiden Stirnseiten (15) mit einem in Axialrichtung vorstehenden Bund (15.1) versehen wird/werden, und das Adapterzwischenstück (13) vor oder bei seiner Verbindung mit den Gelenkwellenabschnitten (5.1, 5.2) auf den Bund (15.1) oder die Bünde (15.1) aufgeschoben oder in diese eingeschoben und dadurch insbesondere mit Bezug auf die Gelenkwellenabschnitte (5.1, 5.2) zentriert wird.

7. Verfahren gemäß einem der Ansprüche 1 bis 5, **dadurch gekennzeichnet, dass** das Durchtrennen der Gelenkwelle (5) an einer Schnittstelle zwischen einem Gelenkwellenrohr (12) und einem Rohranschlussstück (36) erfolgt, in welcher das Rohranschlussstück (36) an das Gelenkwellenrohr (12) angefügt oder in dieses eingefügt ist, und dass das Adapterzwischenstück (13) mit einem axialen Ende anstelle des Rohranschlussstückes (36) an das Gelenkwellenrohr (12) angefügt oder in dieses eingefügt wird und an seinem anderen axialen Ende das Rohranschlussstück (36) montiert wird.

8. Verfahren gemäß einem der Ansprüche 1 bis 5, **dadurch gekennzeichnet, dass** die zur Verfügung gestellten Gelenkwellenabschnitte (5.1, 5.2) ein Gelenkwellenrohr (12) und ein Rohranschlussstück (36) umfassen und das Adapterzwischenstück (13) mit einem axialen Ende an das Gelenkwellenrohr (12) angefügt oder in dieses eingefügt und mit seinem zweiten axialen Ende an dem Rohranschlussstück (36) montiert wird.

9. Verfahren gemäß einem der Ansprüche 1 bis 8, **dadurch gekennzeichnet, dass** das Adapterzwischenstück (13), insbesondere unmittelbar, in einem Lager, insbesondere einem am Fahrzeugrahmen (7) montierten Zwischenlager (11) gelagert wird.

10. Verfahren gemäß einem der Ansprüche 1 bis 9, **dadurch gekennzeichnet, dass** ein Motor, insbesondere Elektromotor als Retarder auf der Gelenkwelle (5) montiert wird.

## Claims

1. A method for mounting a retarder, in particular a permanent magnet retarder (8), in a vehicle drive train having a cardan shaft (5) for drive power transmission, comprising the following steps:
1.1 severing the cardan shaft (5) at an axial position (14) or two axial positions (14) between the joints (19) thereof or providing cardan shaft sections (5.1, 5.2), so that two or three cardan shaft sections (5.1, 5.2, 5.3) with mutually facing end faces (15) are obtained;
1.2 attaching an adapter intermediate piece (13) having one or several receptacles (24) for mounting the retarder to the mutually facing end faces (15) of two cardan shaft sections (5.1, 5.2), so that the adapter intermediate piece (13) is enclosed on both sides in the axial direction between the cardan shaft sections (5.1, 5.2);
1.3 interlocking or materially bonded connecting of the adapter intermediate piece (13) to the end faces (15) or in the region of the end faces (15), so that the two cardan shaft sections (5.1, 5.2) are non-rotatably and/or rigidly connected to one another via the adapter intermediate piece (13);
1.4 mounting of the retarder on the at least one receptacle (24) of the adapter intermediate piece (13).

2. A method according to claim 1, **characterized in that** the adapter intermediate piece (13) is welded to the cardan shaft sections (5.1, 5.2) on the two end faces (15) or in the region of the two end faces (15).

3. A method according to one of the claims 1 or 2, **characterized in that** material projections (35) which can be cut off for balancing or balancing weights are provided on the adapter intermediate piece (13).

4. A method according to one of the claims 1 to 3, **characterized in that** the retarder comprises a rotor (9) and a stator (10), and the rotor (9) is mounted in a rotationally fixed manner on the at least one receptacle (24) of the adapter intermediate piece (13), in particular bolted thereon, and the stator (10) is relatively mounted on the adapter intermediate piece (13) by means of a retarder bearing (16), in particular a rolling bearing.

5. A method according to one of the claims 1 to 3, **characterized in that** the retarder has a rotor (9) and a stator (10) which is relatively mounted on the rotor (9), and the rotor (9) is mounted on the at least one receptacle (24) of the adapter intermediate piece (13) in a rotationally fixed manner, in particular bolted thereon, and the stator (10) is supported against rotation on the vehicle, in particular a vehicle frame (7) thereof.

6. A method according to one of the claims 1 to 5, **characterized in that** one or both end faces (15) is/are provided with a collar (15.1) projecting in the axial direction, and the adapter intermediate piece (13), before or during its connection with the cardan shaft sections (5.1, 5.2), is pushed onto the collar (15.1) or collars (15.1), or is inserted therein, and is thus centred in particular with respect to the cardan shaft sections (5.1, 5.2).

7. A method according to one of the claims 1 to 5, **characterized in that** the severing of the cardan shaft (5) takes place at an interface between a cardan shaft tube (12) and a pipe connecting piece (36), in which the pipe connecting piece (36) is attached to or inserted into the cardan shaft tube (12), and the adapter intermediate piece (13) is attached to or inserted into the cardan shaft tube (12) with an axial end instead of the pipe connecting piece (36), and the pipe connecting piece (36) is mounted on its other axial end.

8. A method according to one of the claims 1 to 5, **characterized in that** the provided cardan shaft sections (5.1, 5.2) comprise a cardan shaft tube (12) and a pipe connecting piece (36), and the adapter intermediate piece (13) is connected with an axial end to the cardan shaft tube (12) or inserted into said tube and is mounted with its second axial end on the pipe connecting piece (36).

9. A method according to one of the claims 1 to 8, **characterized in that** the adapter intermediate piece (13) is mounted, in particular directly, in a bearing, in particular an intermediate bearing (11) mounted on the vehicle frame (7).

10. A method according to one of the claims 1 to 9, **characterized in that** a motor, in particular an electric motor, is mounted as a retarder on the cardan shaft (5).

## Revendications

1. Procédé pour monter un ralentisseur, en particulier un ralentisseur à aimant permanent (8), dans une chaîne cinématique de véhicule qui présente un arbre articulé (5) pour la transmission de puissance d'entraînement, lequel procédé comprend les étapes suivantes :
1.1 sectionnement de l'arbre articulé (5) à une position axiale (14) ou à deux positions axiales (14) entre ses articulations (19) ou mise à disposition de parties d'arbre articulé (5.1, 5.2), de sorte à obtenir deux ou trois parties d'arbre articulé (5.1, 5.2, 5.3) avec des faces frontales (15) tournées les unes vers les autres ;
1.2 ajout d'une pièce intermédiaire d'adaptation (13) qui présente un ou plusieurs logements (24) pour le montage du ralentisseur sur les faces frontales (15) tournées l'une vers l'autre de deux parties d'arbre articulé (5.1, 5.2), de sorte que la pièce intermédiaire d'adaptation (13) soit incluse des deux côtés dans la direction axiale entre les parties d'arbre articulé (5.1, 5.2) ;
1.3 liaison par complémentarité de formes ou coopération de matières de la pièce intermédiaire d'adaptation (13) avec les faces frontales (15) ou dans la zone des faces frontales (15), de sorte que les deux parties d'arbre articulé (5.1, 5.2) soient raccordées l'une à l'autre par la pièce intermédiaire d'adaptation (13) de façon solidaire en rotation et/ou de façon rigide ;
1.4 montage du ralentisseur sur ledit au moins un logement (24) de la pièce intermédiaire d'adaptation (13).

2. Procédé selon la revendication 1, **caractérisé en ce que** la pièce intermédiaire d'adaptation (13) est soudée aux parties d'arbre articulé (5.1, 5.2) aux deux faces frontales (15) ou dans la zone des deux faces frontales (15).

3. Procédé selon l'une des revendications 1 ou 2, **caractérisé en ce que** des saillies de matière (35) usinables pour l'équilibrage ou des poids d'équilibrage sont prévus sur la pièce intermédiaire d'adaptation (13).

4. Procédé selon l'une des revendications 1 à 3, **caractérisé en ce que** le ralentisseur présente un rotor (9) et un stator (10), et le rotor (9) est monté de façon solidaire en rotation, en particulier vissé, sur ledit au moins un logement (24) de la pièce intermédiaire d'adaptation (13), et le stator (10) est monté de manière relative sur la pièce intermédiaire d'adaptation (13) au moyen d'un palier de ralentisseur (16), en particulier d'un palier à roulement.

5. Procédé selon l'une des revendications 1 à 3, **caractérisé en ce que** le ralentisseur présente un rotor (9) et un stator (10) monté de manière relative sur le rotor (9), et le rotor (9) est monté de façon solidaire en rotation, en particulier vissé, sur ledit au moins un logement (24) de la pièce intermédiaire d'adaptation (13), et le stator (10) prend appui contre la rotation sur le véhicule, en particulier sur un châssis (7) de celui-ci.

6. Procédé selon l'une des revendications 1 à 5, **caractérisé en ce qu'**une ou les deux faces frontales (15) est/sont pourvue(s) d'un collet (15.1) en saillie dans la direction axiale, et la pièce intermédiaire d'adaptation (13) est montée sur le collet (15.1) ou les collets (15.1) ou insérée dans celui-ci ou ceux-ci avant ou lors de sa liaison avec les parties d'arbre articulé (5.1, 5.2) et ainsi en particulier centrée par rapport aux parties d'arbre articulé (5.1, 5.2).

7. Procédé selon l'une des revendications 1 à 5, **caractérisé en ce que** le sectionnement de l'arbre articulé (5) est effectué à un point de jonction entre un tube d'arbre articulé (12) et une pièce de raccord de tube (36), auquel la pièce de raccord de tube (36) est aboutée au tube d'arbre articulé (12) ou insérée dans celui-ci, et que la pièce intermédiaire d'adaptation (13) est aboutée au tube d'arbre articulé (12) ou insérée dans celui-ci à la place de la pièce de raccord de tube (36) par une extrémité axiale et la pièce de raccord de tube (36) est montée à son autre extrémité axiale.

8. Procédé selon l'une des revendications 1 à 5, **caractérisé en ce que** les parties d'arbre articulé (5.1, 5.2) mises à disposition comprennent un tube d'arbre articulé (12) et une pièce de raccord de tube (36) et la pièce intermédiaire d'adaptation (13) est aboutée au tube d'arbre articulé (12) ou insérée dans celui-ci par une extrémité axiale et montée sur la pièce de raccord de tube (36) par sa deuxième extrémité axiale.

9. Procédé selon l'une des revendications 1 à 8, **caractérisé en ce que** la pièce intermédiaire d'adaptation (13) est montée, en particulier directement, dans un palier, en particulier un palier intermédiaire (11) monté sur le châssis de véhicule (7).

10. Procédé selon l'une des revendications 1 à 9, **caractérisé en ce qu'**un moteur, en particulier un moteur électrique, est monté sur l'arbre articulé (5) en tant que ralentisseur.
